# EUROPÄISCHE PATENTSCHRIFT

(11) **EP 1 314 666 B1**
(45) Veröffentlichungstag und Bekanntmachung des Hinweises auf die Patenterteilung: **02.03.2005**
(21) Anmeldenummer: 02024167.5
(22) Anmeldetag: 30.10.2002
(51) Int. Cl.: B65G 65/23

(54) **Verfahren und Vorrichtung zum Handhaben von Gepäckstücken auf Flughäfen**
Method and device for handling luggage at airports
Procédé et dispositif de manipulation des bagages dans les aéroports

(30) Priorität: 27.11.2001 DE 10158092
(43) Veröffentlichungstag der Anmeldung: 28.05.2003
(73) Patentinhaber: ABB PATENT GmbH, 68526 Ladenburg (DE)
(72) Erfinder: Koini, Martin, Dipl.-Ing., 57636 Sörth (AT); Nagel, Günter, Dr., 76676 Graben-Neudorf (DE); Grab, Markus, 68519 Viernheim (DE); Kohl, Martin, 69469 Weinheim (DE)
(74) Vertreter: Miller, Toivo

(56) Entgegenhaltungen:
- US-A- 3 602 383
- US-A- 3 717 270
- US-A- 3 863 781
- US-A- 3 994 405
- US-A- 4 802 810

## Beschreibung

Die Erfindung betrifft ein Verfahren zum Handhaben von Gepäckstücken in der Gepäckabwicklung auf Flughäfen, insbesondere beim Entladen oder Umladen der Gepäckstücke, welche in Gepäckcontainern, sogenannten ULD (= unitized load device), angeordnet sind, wobei die Gepäckcontainer mittels Gepäckkarren transportiert werden, die zu einem Zugverband zusammenfaßt sind und zu einer Gepäckförderanlage gebracht werden, wo jeweils ein Gepäckkarren mit dem mit Gepäck und/oder Frachtgut beladenen Gepäckcontainer jeweils seitlich im Abstand neben einem zur Gepäckförderanlage gehörigen Förderband angeordnet wird, von welchem die Gepäckstücke weiterbefördert werden, zum Beispiel zur Gepäckausgabe. Ferner betrifft die Erfindung auch eine Vorrichtung zur Durchführung des Verfahrens.

Das stetige Wachstum des internationalen Luftverkehrs hat dazu geführt, daß die Gepäckabwicklung, insbesondere auf Flughäfen mit Drehkreuzfunktion, das heißt mit erhöhter Anzahl von Umsteigern unter den Fluggästen, zunehmend standardisiert und automatisiert wird. Gerade beim Umsteigen ist die für den Gepäcktransport zur Verfügung stehende Zeit häufig knapp bemessen.

Die angestrebte Standardisierung und Automatisierung auf den Flughäfen wurde bislang insbesondere für die Bereiche Gepäckannahme beim Abflug einerseits und Sortierung und Verladung im Flugzeug anderseits verwirklicht; insbesondere durch die Einführung der bereits erwähnten Container für den Transport von Frachtgut und Gepäck konnte beim Beladen der Flugzeuge ein Fortschritt erzielt werden.

An der Schnittstelle zwischen diesen beiden Bereichen jedoch, nämlich zwischen der Gepäckannahme beim Abflug einerseits und der Sortierung und Beladung des Flugzeugs anderseits, ist das manuelle Umladen der Gepäckstücke zwischen Containern und Gepäckkarren einerseits und der Gepäckförderanlage andererseits bislang immer noch erforderlich. Hierbei wird das Gepäck von Hand aus dem jeweiligen Gepäckwagen entnommen und auf ein Förderband abgelegt, welches den Weitertransport übernimmt. Dies erfordert stets einen nicht unerheblichen Kraftaufwand, da das Gewicht des Gepäcks beziehungsweise Frachtguts üblicherweise bis zu 30 kg/Stück beträgt.

Handelt es sich um Umsteigergepäck muß die Entladung zudem in sehr kurzer Zeit erfolgen, damit das Gepäck rechtzeitig zu den vorgesehenen Anschlußflüge gelangen kann. Hierzu ist ein erhöhter Personalaufwand erforderlich.

Gemäß einer bekannten Verfahrensweise zur Vereinfachung des Ent- oder Umladevorganges wird ein Zug mit mehreren Gepäckwagen längs an ein Förderband herangefahren. Hierbei wird zwischen dem Zug und dem Förderband wird ein Arbeitsbereich freigehalten, der unter Umständen als Podest mit ca. 150 mm Höhe erhöht ausgebildet ist. In dieser Position das Gepäck beziehungsweise Frachtgut manuell von den Gepäckkarren auf das Förderband der Gepäckförderanlage umgeladen.

Entsprechend einer in der US-A-3863781 vorgeschlagenen Weiterentwicklung dieser bekannten Verfahrensweise wird ein mit einem Container beladene Gepäckkarren unmittelbar an das Förderband der Gepäckförderanlage herangefahren, bis der Gepäckkarren mit einer Ladestation fluchtet, so daß die Ladebereiche beider Einrichtungen örtlich übereinstimmen. Nachdem der Lastkarren die Ladestation erreicht hat und auf diese ausgerichtet ist, wird der Container auf die Ladestation verschoben und an dieser gesichert. Die Ladestation, die zur Gepäckförderanlage gehört, ist mit einer Schwenkvorrichtung versehen, mittels welcher der daran gesicherte Container in Förderrichtung gekippt wird, so daß die darin befindlichen Gepäckstücke und/oder das Frachtgut infolge der Schwerkraft in Kipprichtung getrieben auf ein zur Gepäckförderanlage gehöriges angrenzendes Förderband rutschen, über welches sie zur Gepäckausgabe gefördert werden.

Ausgehend von diesem Stand der Technik ist es Aufgabe der Erfindung ein Verfahren sowie eine Vorrichtung der eingangs genannten Art anzugeben, welche den Ent- beziehungsweise Umladevorgang weiter vereinfachen.

Diese Aufgabe wird erfindungsgemäß durch die kennzeichnenden Merkmale des Anspruchs 1 gelöst. Weitere vorteilhafte Ausgestaltungen und Verbesserungen der Erfindung sind Gegenstand der Unteransprüche.

Erfindungsgemäß ist das beanspruchte Verfahren dadurch gekennzeichnet, daß jeder Gepäckcontainer auf dem zugeordneten Gepäckkarren gesichert wird, daß der aus Gepäckkarren gebildete Zugverband neben einer Ladestation der Gepäckförderanlage plaziert wird, daß wenigstens ein Gepäckkarren mitsamt dem darauf angeordneten Gepäckcontainer geschwenkt wird und daß das im Gepäckcontainer befindliche Ladegut/Gepäck herausgleitet auf das seitlich daneben angeordnete Förderband.

Vorteilhafterweise wird der aus Gepäckkarren gebildete Zugverband in geringem Abstand zu der Ladestation abgestellt, so daß lediglich ein minimaler Zwischenraum zwischen dem Gepäckkarren und der Ladestation verbleibt. Hierdurch wird einerseits die Gefahr von Betriebsstörungen durch eingeklemmte Gepäckstücke oder dgl. vermieden. Gleichzeitig ist hierdurch ein kontinuierlicher Weitertransport der zu verladenden Güter gewährleistet.

Für den Fall, daß die Erfindung in bereits bestehende Anlagen, die ursprünglich nicht für das erfindungsgemäße Transportkonzept vorgesehen waren und daher maßlich abweichende Gepäckkarren oder Gepäckcontainer aufweisen, integriert werden soll, kann gemäß einer speziellen Ausführungsform des erfindungsgemäßen Verfahrens vorgesehen sein, daß zwischen dem jeweiligen Gepäckkarren und dem Förderband ein Gleitblech mit Gefälle angeordnet wird, über welches das Gepäck und/oder Ladegut auf das Förderband gelangt.

Eine Vorrichtung zur Durchführung des vorstehend beschriebenen Verfahrens ist mit einer Ladestation ausgestattet, die zu einer Gepäckförderanlage mit an die Ladestation angrenzendem Förderband gehört und zur Weiterförderung von Gepäckstücken dient, welche aus einem Container ausgeladen wurden, der auf einem Gepäckwagen an die Ladestation gelangt ist und eine gegebenenfalls verschließbare Ladeöffnung aufweist.

Um den bisherigen Verfahrensablauf zu verbessern und auch zu beschleunigen ist erfindungsgemäß die Ladestation zur Aufnahme wenigstens eines Gepäckkarren ausgestaltet und mit einer Schwenkvorrichtung versehen, welche den jeweils darauf abgestellten Gepäckkarren mitsamt dem darauf angeordneten Gepäckcontainer schwenkt. Hierbei, nämlich in Schwenkstellung, kann der im Gepäckcontainer befindliche Containerinhalt, nämlich Gepäckstücke und/oder Ladegut selbsttätig aus dem Container auf das seitlich daneben angeordnete Förderband herausgleiten.

Entsprechend einer bevorzugten Ausführungsform, die insbesondere für die nachträgliche Ertüchtigung bestehender Gepäckanlagen konzipiert ist, ist zwischen der Ladestation und dem daneben abgestellten, aus Gepäckkarren gebildeten Zugverband ein schräggestelltes Blech vorgesehen, über welches in Schwenkstellung die Gepäckstücke und/oder das Ladegut selbsttätig aus dem Gepäckcontainer auf das angrenzende Förderband herausgleiten können.

Ansonsten erweist es sich als vorteilhaft, daß zwischen der Ladestation einerseits und den Gepäckcontainem beziehungsweise den diese aufnehmenden Gepäckkarren andererseits ein möglichst geringer Abstand eingestellt ist, um so mögliche Betriebsstörungen, zum Beispiel infolge in den Zwischenraum gelangter Gepäckstücke, welche den Entladevorgang möglicherweise blockieren können, zu vermeiden.

Entsprechend einer besonders vorteilhaften Ausführungsform der erfindungsgemäßen Vorrichtung sind die Ladestation sowie die zugehörige Schwenkvorrichtung so gestaltet, daß sie einen kompletten Zugverband aufzunehmen in der Lage ist und diesen zur Entleerung der Gepäckcontainer verschwenkt.

Zumindest aber ist die Vorrichtung nach der Erfindung derart bemessen, daß die Länge der Ladestation und der zugehörigen Schwenkvorrichtung ausreicht für wenigstens 5 miteinander verbundene Gepäckkarren, wobei die Schwenkkraft ebenfalls ausreichend ist, um die Gepäckkarren zu ihrer Entleerung zu verschwenken.
1. In vorteilhafter Weiterbildung kann das an die Ladestation angrenzende Förderband mit seinem an der Ladestation angrenzenden Ende höheneinstellbar ausgebildet sein, zum Beispiel indem das an die Ladestation angrenzende Förderband als hydraulisch betätigbare Förderbrücke ausgebildet ist, die gegebenenfalls zusätzlich mit zwei Gurtförderern versehen ist.

Diese und weitere vorteilhafte Ausgestaltungen und Verbesserungen der Erfindung finden sich in der nachfolgenden Beschreibung eines Ausführungsbeispieles.

Anhand eines in der beigefügten Zeichnung dargestellten Ausführungsbeispieles sollen die Erfindung, vorteilhafte Ausgestaltungen und Verbesserungen sowie weitere Vorteile der Erfindung näher erläutert und beschrieben werden.

Es zeigen
- Fig. 1:: die erfindungsgemäße Gepäckförderanlage in Ausgangsposition in stimseitiger Ansicht,
- Fig. 2:: die Anlage gemäß Fig. 1 mit einem Container in Kippstellung von vom.

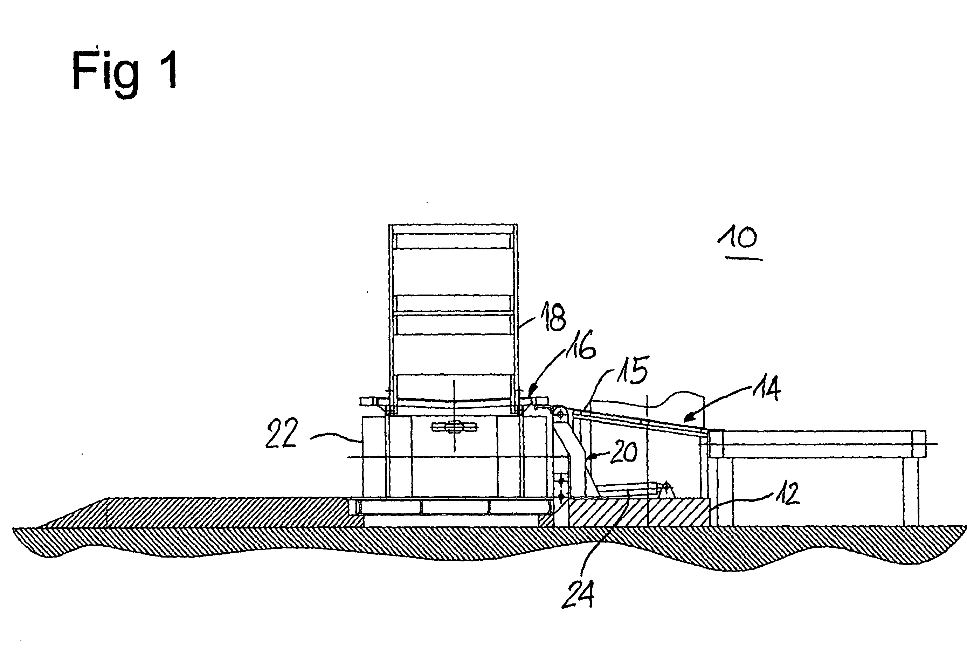

In Fig. 1 ist eine erfindungsgemäße Gepäckförderanlage 10 in Seitenansicht dargestellt, die einen Grundrahmen 12 mit darauf angeordneten weiteren Anlagenelementen aufweist, darunter eine Ladestation 14 mit einer Ladeplattform 15.

Die Ladeplattform 15 der Ladestation 14 bildet den Entladeort für einen Gepäckwagen 16, auch Dolly genannt, auf welchem ein Container 18 für Gepäck und/oder Frachtgut befördert wird und dessen Kontur in Fig. 1 gezeigt ist. Zum Entladen wird der Gepäckwagen 16 mit dem darauf gesicherten Container 18 in Position gebracht, das heißt, so abgestellt, daß der Container 18 mit der Ladestation 14 fluchtet. Der Grundrahmen 12 ist ein verwindungssteifer Rahmen aus Stahlhohlprofilen, der zum Gepäckwagen 16 hin Führungsprofile für ein Schwenkwerk 20 besitzt, mittels welchem der Gepäckwagen 16 mitsamt dem Gepäckcontainer 18 verschwenkt wird. Außerdem ist hier ein Rammschutz für den Gepäckwagen vorgesehen.

Das Schwenkwerk 20 ist als Rahmen ausgebildet, der auf vier Rollen in Führungsprofilen gelagert ist. Auf dem Schwenkwerk 20 ist eine Lastaufnahme 22 gelagert sowie der Festpunkt eines schwenkbeweglichen Hydraulikzylinders 24 zum Schwenken des Gepäckkarrens.

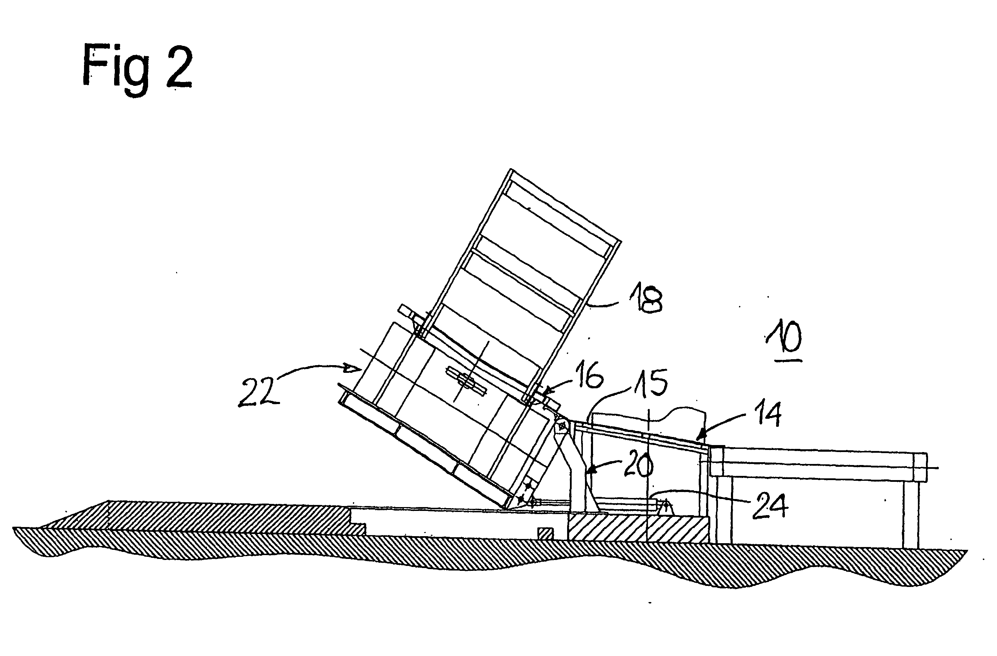

In Fig. 2 ist die zuvor beschriebene Anordnung geschwenkter Stellung von vom gezeigt, wobei für die gleichen Teile die entsprechenden Bezugsziffern verwendet wurden. Anhand einer Beschreibung des Verfahrensablaufes wird die Wirkungsweise des erfindungsgemäßen Verfahrens und der hierauf gerichteten Vorrichtung erläutert.

Ein Gepäckwagenzug wird längs am Rammschutz entlang gefahren und mittels Bodenmarkierungen so positioniert, daß ein Gepäckwagen 16 und die Lastaufnahme 22 miteinander fluchten. Der auf der Lastaufnahme 22 befindliche Container 18 wird nun mittels Verriegelungen gesichert. Daraufhin wird der Kippmechanismus in Funktion gesetzt. Die Lastaufnahme schwenkt und mit ihr der Gepäckkarren mitsamt dem darauf ruhenden Gepäckcontainer und das darin befindliche Gepäck/Ladegut gleitet heraus auf das daneben befindliche Förderband.

## Patentansprüche

1. Verfahren zum Handhaben von Gepäckstücken in der Gepäckabwicklung auf Flughäfen, insbesondere beim Entladen oder Umladen der Gepäckstücke, welche in Gepäckcontainern(18), sogenannten ULD (= unitized load device), angeordnet sind, wobei die Gepäckcontainer (18) mittels zu einem Zugverband zusammenfaßten Gepäckkarren (16) zu einer Gepäckförderanlage (10) mit einer Kippvorrichtung (20) und mit einem Förderband transportiert werden, wo ein Gepäckkarren (16) seitlich im Abstand neben der Kippvorrichtung (20) positioniert wird, der darauf befindliche Gepäckcontainer (18) vom Gepäckkarren 16) auf die Kippvorrichtung (20) verschoben und dann von dieser in Kipplage gebracht wird, so daß die Gepäckstücke aus dem Gepäckcontainer (18) auf das Förderband entleert und weiterbefördert werden, zum Beispiel zur Gepäckausgabe,
**dadurch gekennzeichnet, daß**
jeder Gepäckcontainer (18) auf dem zugeordneten Gepäckkarren (16) gesichert wird, daß der aus Gepäckkarren (16) gebildete Zugverband neben einer Ladestation (14) der Gepäckförderanlage (10) plaziert wird, wo wenigstens ein Gepäckkarren (16) mitsamt dem darauf angeordneten Gepäckcontainer (18) geschwenkt wird, und daß das im Gepäckcontainer (18) befindliche Ladegut/Gepäck herausgleitet auf das seitlich daneben angeordnete Förderband.

2. Verfahren nach Anspruch 1, **dadurch gekennzeichnet, daß** zwischen dem jeweiligen Gepäckkarren (16) und dem Förderband ein Gleitblech (15) mit Gefälle angeordnet wird.

3. Verfahren nach einem der vorherigen Ansprüche, **dadurch gekennzeichnet, daß** der aus Gepäckkarren (16) gebildete Zugverband in geringem Abstand zu der Ladestation (14) abgestellt wird, so daß lediglich ein minimaler Zwischenraum zwischen dem Gepäckkarren (16) und der Ladestation (14) verbleibt.

4. Vorrichtung zur Durchführung des Verfahrens nach einem der vorherigen Ansprüche mit einer Ladestation (14), die zu einer Gepäckförderanlage (10) mit einer Kippvorrichtung (20) und einem an die Ladestation (14) angrenzenden Förderband gehört und zur Weiterförderung von Gepäckstücken dient, die aus einem mittels Gepäckwagen (16) an die Ladestation (14) transportierten Gepäckcontainer (18) zu entladen sind, der eine Ladeöffnung aufweist, welche mittels einer Lamellenwand verschließbar ist,
**dadurch gekennzeichnet, daß**
die Kippvorrichtung (20) der Ladestation (14) zur Aufnahme wenigstens eines Gepäckkarrens (16) dient und den jeweils darauf abgestellten Gepäckkarren (16) mitsamt dem darauf angeordneten Gepäckcontainer (18) schwenkt, so daß in Schwenkstellung der im Gepäckcontainer (18) befindliche Gepäckcontainer inhalt, nämlich Gepäckstücke und/oder Ladegut, selbsttätig aus dem Gepäckcontainer (18) auf das seitlich daneben angeordnete Förderband herausgleitet.

5. Vorrichtung nach Anspruch 4, **dadurch gekennzeichnet, daß** die Gepäckstücke und/oder das Ladegut in Schwenkstellung selbsttätig aus dem Gepäckcontainer (18) über ein schräggestelltesGleitblech (15) auf das angrenzende Förderband herausgleiten.

6. Vorrichtung nach einem der Ansprüche 4 oder 5 , **dadurch gekennzeichnet, daß** die Ladestation (14) und die zugehörige Kippvorrichtung (20) einen kompletten Zugverband aufnimmt und diesen zur Entleerung der Gepäckcontainer (18) verschwenkt.

7. Vorrichtung nach einem der Ansprüche 4 bis 6 , **dadurch gekennzeichnet, daß** die Länge der Ladestation (14) und der zugehörigen Kippvorrichtung (20) derart bemessen ist, daß sie wenigstens 5 miteinander verbundene Gepäckkarren (16) aufnimmt und zu deren Entleerung verschwenkt.

8. Vorrichtung nach einem der Ansprüche 4 bis 7 , **dadurch gekennzeichnet, daß** das an die Ladestation (14) angrenzende Förderband mit seinem an der Ladestation (14) angrenzenden Ende höheneinstellbar ist.

9. Vorrichtung nach einem der vorherigen Ansprüche 4 bis 8 , **dadurch gekennzeichnet, daß** das an die Ladestation (14) angrenzende Förderband als Förderbrücke ausgebildet ist, die hydraulisch betätigbar ist.

10. Vorrichtung nach einem der vorherigen Ansprüche 4 bis 9 , **dadurch gekennzeichnet, daß** die an die Ladestation (14) angrenzende Förderbrücke mit zwei Gurtförderern versehen ist.

## Claims

1. Process for handling baggage items in the baggage handling operation at airports, especially in the unloading or transfer of. baggage items disposed in baggage containers (18), so-called ULD's (= unitized load devices), the baggage containers (18) being conveyed by means of baggage trolleys (16), combined into a train, to a baggage conveyor system (10) having a tilt apparatus (20) and a conveyor belt, where a baggage trolley (16) is positioned alongside but apart from the tilt apparatus (20), the baggage container (18) present thereon is displaced from the baggage trolley (16) .onto the tilt apparatus (20) and is brought by this into a tilting position, so that the baggage items are emptied out of the baggage container (18) onto the conveyor belt and are transported onward, for example to the baggage reclaim,
**characterized in that** each baggage container (18) is secured on the assigned baggage trolley (16), **in that** the train formed from baggage trolleys (16) is placed next to a loading bay (14) of the baggage conveyor system (10), where at least one baggage trolley (16), together with the baggage container (18) disposed thereon, is swivelled, and **in that** the cargo/baggage present in the baggage container (18) slides out onto the conveyor belt disposed alongside.

2. Process according to Claim 1, **characterized in that** a sloping slide plate (15) is disposed between the respective baggage trolley (16) and the conveyor belt.

3. Process according to one of the previous claims, **characterized in that** the train formed from baggage trolleys (16) is parked at a short distance from the loading bay (14), so that only a minimal interspace remains between the baggage trolley (16) and the loading bay (14).

4. Apparatus for implementing the process according to one of the previous claims, having a loading bay (14), which forms part of a baggage conveyor system (10) having a tilt apparatus (20) and a conveyor belt adjacent to the loading bay (14) and serves for the onward conveyance of baggage items to be unloaded from a baggage container (18), which is conveyed to the loading bay (14) by means of baggage carts (16) and has a loading opening which can be closed off by means of a lamellar wall,
**characterized in that**
the tilt apparatus (20) of the loading bay (14) serves to receive at least one baggage trolley (16) and swivels the baggage trolley (16) respectively parked thereon, together with the baggage container (18) disposed thereon, so that, in the swivel position, the baggage container content present in the baggage container (18), namely baggage items and/or cargo, slides automatically out of the baggage container (18) onto the conveyor belt disposed alongside it.

5. Apparatus according to Claim 4, **characterized in that** the baggage items and/or the cargo, in the swivel position, slide automatically out of the baggage container (18) via an inclined slide plate (15) onto the adjacent conveyor belt.

6. Apparatus according to either of Claims 4 or 5, **characterized in that** the loading bay (14) and the associated tilt apparatus (20) receives a complete train and swivels this to empty the baggage containers (18).

7. Apparatus according to one of Claims 4 to 6, **characterized in that** the length of the loading bay (14) and of the associated tilt apparatus (20) is dimensioned such that the loading bay receives at least 5 interconnected baggage trolleys (16) and swivels in order to empty them.

8. Apparatus according to one of Claims 4 to 7, **characterized in that** the conveyor belt adjacent to the loading bay (14) is adjustable in height by its end adjacent to the loading bay (14).

9. Apparatus according to one of the previous Claims 4 to 8, **characterized in that** the conveyor belt adjacent to the loading bay (14) is configured as a conveyor bridge, which is hydraulically operated.

10. Apparatus according to one of the previous Claims 4 to 9, **characterized in that** the conveyor bridge adjacent to the loading bay (14) is provided with two belt conveyors.

## Revendications

1. Procédé de manipulation de bagages pour le traitement des bagages dans les aéroports, notamment lors des opérations de déchargement ou de transbordement de bagages, qui sont disposés dans des conteneurs à bagages (18), dits ULD (= unitized load device), les conteneurs à bagages (18) étant acheminés au moyen de chariots à bagages (16) groupés en un train jusqu'à une installation (10) de transport de bagages qui comprend un dispositif de basculement (20) et une bande transporteuse et dans laquelle un chariot à bagages (16) est positionné à distance sur le côté du dispositif de basculement (20), le conteneur à bagages (18) placé sur celui-ci est déplacé du chariot à bagages (16) sur le dispositif de basculement (20) et est amené par ce dernier dans une position basculée, de manière à vider les bagages du conteneur à bagages (18) sur la bande transporteuse et à assurer leur transport, par exemple jusqu'au poste de remise des bagages, **caractérisé par le fait que** chaque conteneur à bagages (18) est arrimé sur le chariot à bagages (16) concerné, que le train formé de chariots à bagages est amené à côté d'un poste de chargement (14) de l'installation de transport des bagages (10), dans lequel au moins un chariot à bagages (16) et le conteneur à bagages (18) placé sur celui-ci sont basculés et **par le fait que** le produit de chargement/les bagages qui se trouvent à l'intérieur du conteneur à bagages (18) glissent hors dudit conteneur sur la bande transporteuse placée à côté.

2. Procédé selon la revendication 1, **caractérisé par** le fait une tôle de glissement (15) inclinée est disposée entre le chariot à bagages (16) concerné et la bande transporteuse.

3. Procédé selon une des revendications précédentes, **caractérisé par le fait que** train formé de chariots à bagages (16) est placé à faible distance du poste de chargement (14) de telle sorte qu'il ne subsiste qu'un espace minimal entre le chariot à bagages (16) et le poste de chargement (14).

4. Dispositif pour la mise en oeuvre du procédé selon une des revendications précédentes comportant un poste de chargement (14) qui fait partie d'une installation (10) de transport de bagages avec un dispositif de basculement (20) et une bande transporteuse contiguë au poste de chargement (14) et assure le transport de bagages déchargés de conteneurs à bagages (18) pourvus d'une ouverture de chargement fermée par un rideau à lamelles qui sont amenés au poste de chargement (14) au moyen de chariots à bagages (16), **caractérisé par le fait que** le dispositif de basculement (20) du poste de chargement (14) sert à recevoir au moins un chariot à bagages (16) et bascule le chariot à bagages (16) avec le conteneur à bagages (18) placé sur celui-ci, de telle sorte que dans la position basculée, le contenu du conteneur à bagages (18), à savoir les bagages et/ou les produits de chargement, glisse automatiquement hors du conteneur à bagages (18) sur la bande transporteuse disposée à côté.

5. Dispositif selon la revendication 4, **caractérisé par le fait que** les bagages et/ou les produites de chargement, dans la position basculée, glissent automatiquement hors du conteneur à bagages (18) sur la bande transporteuse contiguë via une tôle de glissement (15) inclinée.

6. Dispositif selon la revendication 4 ou 5, **caractérisé par le fait que** le poste de chargement (14) et le dispositif de basculement (20) associé sont dimensionnés de manière à recevoir un train complet et à le basculer pour vider les conteneurs à bagages (18).

7. Dispositif selon la revendication 4 à 6, **caractérisé par le fait que** le poste de chargement (14) et le dispositif de basculement (20) associé sont dimensionnés de manière à recevoir au moins 5 chariots à bagages (16) liés entre eux et à les basculer pour les vider.

8. Dispositif selon une des revendications 4 à 7, **caractérisé par le fait que** la bande transporteuse contiguë au poste de chargement (14) à son extrémité voisine du poste de chargement (14) est réglable en hauteur.

9. Dispositif selon une des revendications 4 à 8, **caractérisé par le fait que** la bande transporteuse contiguë au poste de chargement (14) est conformée en portique actionnable hydrauliquement.

10. Dispositif selon une des revendications 4 à 9, **caractérisé par le fait que** le portique contigu au poste de chargement (14) est muni de deux transporteurs à bande.
